# EUROPEAN PATENT APPLICATION

(11) **EP 3 667 274 A1**
(43) Date of publication of application: **17.06.2020**
(21) Application number: 18212724.1
(22) Date of filing: 14.12.2018
(51) Int. Cl.: G01K 7/01

(54) **DEVICE AND METHOD FOR GENERATING A PROPORTIONAL TO ABSOLUTE TEMPERATURE (PTAT) OUTPUT CURRENT WITH ADJUSTABLE SLOPE**

(71) Applicant: NXP B.V., 5656 AG Eindhoven (NL)
(72) Inventor: Madaan, Harcharan Singh, 5656 AG Eindhoven (NL)
(74) Representative: Krott, Michel

(57) **Abstract**

There is described a device for generating a proportional to absolute temperature, PTAT, output current (lout) with adjustable slope and fixed current value at a predetermined reference temperature (TR), the device comprising a current amplifier (110) having an input (112) and an output (114), a core PTAT current source (120) coupled to supply a core PTAT current to the input of the current amplifier, a plurality of pairs of slope adjusting current sources, each pair of slope adjusting current sources comprising one constant current source (132-1, 132-2, 132-3, 132-4, 132-5) and one auxiliary PTAT current source (142-1, 142-2, 142-3, 142-4, 142-5), and switching circuitry adapted to adjust the slope of the PTAT output current at the output of the current amplifier by selectively coupling a subset of the plurality of pairs of slope adjusting current sources to the input of the current amplifier such that the constant current source of each pair in the subset subtracts a corresponding constant current from the input of the current amplifier while the auxiliary PTAT current source of each pair in the subset adds a corresponding auxiliary PTAT current to the input of the current amplifier. There is also described a corresponding method.

## Description

### FIELD OF THE INVENTION

The present invention relates to the field of temperature dependent current sources, in particular to a device and a method for generating a proportional to absolute temperature, PTAT, output current with adjustable slope and fixed current value at a predetermined reference temperature.

### ART BACKGROUND

Temperature dependent current sources, such as proportional to absolute temperature (PTAT) current sources, have many applications, such as temperature sensors in automobiles and other vehicles. In order to be able to use the same device is various applications and with a high degree of flexibility, it may be desirable to adjust the slope or proportionality factor, i.e. the ratio ΔI/ΔT, where I denotes current and T denotes temperature. However, changing the slope of a PTAT current source, e.g. by subtracting a constant (temperature independent) current from the PTAT current and amplifying the difference, may also cause an offset in the resulting current. This is a significant drawback, since many applications require that the output current has a predetermined value at a certain reference temperature.

There may therefore be a need for a way of generating a PTAT current with adjustable slope in such a way that for all slopes the current will have the same reference current value at a given reference temperature value.

### SUMMARY OF THE INVENTION

This need may be met by the subject matter according to the independent claims. Advantageous embodiments of the present invention are set forth in the dependent claims.

According to a first aspect, there is provided a device for generating a proportional to absolute temperature, PTAT, output current with adjustable slope and fixed current value at a predetermined reference temperature, the device comprising (a) a current amplifier having an input and an output, (b) a core PTAT current source coupled to supply a core PTAT current to the input of the current amplifier, (c) a plurality of pairs of slope adjusting current sources, each pair of slope adjusting current sources comprising one constant current source and one auxiliary PTAT current source, and (d) switching circuitry adapted to adjust the slope of the PTAT output current at the output of the current amplifier by selectively coupling a subset of the plurality of pairs of slope adjusting current sources to the input of the current amplifier such that the constant current source of each pair in the subset subtracts a corresponding constant current from the input of the current amplifier while the auxiliary PTAT current source of each pair in the subset adds a corresponding auxiliary PTAT current to the input of the current amplifier.

This aspect is based on the idea that the slope of the output PTAT current can be adjusted by selectively coupling one or more pairs of slope adjusting current sources to the input of the current amplifier, wherein each pair comprises one constant (i.e. temperature independent) current source and one auxiliary PTAT current source. The current from the constant current source(s) is subtracted from the core PTAT current while the PTAT current from the auxiliary PTAT current source(s) is added to the core PTAT current in order to compensate for the offset applied by subtracting the constant current. Thereby, the slope is easily adjustable by corresponding operation of the switching circuitry and at the same time, a fixed value of the output current can be provided for all possible values of the slope, i.e. independent on the number of pairs of slope adjusting current sources that is activated.

In the present context, the term "slope" may particularly denote the gradient of the output PTAT current as a function of temperature, i.e. the ratio ΔI/ΔT or more precisely the gradient dI/dT.

In the present context, the term "subset" may particularly denote any possible number of pairs of slope adjusting current sources between one single pair and all pairs.

If no slope adjusting current sources are coupled to the input of the current amplifier, the slope of the PTAT output current is determined by the slope of the core PTAT current source and the gain of the current amplifier. For each activated pair of slope adjusting current sources, the slope will be increased.

The switching circuitry preferably comprises a plurality of individually controllable switches arranged to selectively connect and disconnect each of the constant current sources and each of the auxiliary PTAT current sources. The switches may be pairwise coupled, such that one pair consisting of one constant current source and one auxiliary PTAT current source is always connected or disconnected at the same time.

According to an embodiment, the current of each constant current source is equal to the current of each auxiliary PTAT current source when the temperature is equal to the predetermined reference temperature.

Thus, at the predetermined reference temperature, the subtracted constant current will equal the added auxiliary PTAT current, resulting in a net change of 0 (zero). This assures that, independent of the slope selected, i.e. independent of the number of pairs of slope adjusting current sources that is coupled to the input of the current amplifier, the resulting output current will be the same at the predetermined reference temperature.

According to a further embodiment, the predetermined reference temperature is 27°C.

According to a further embodiment, the core PTAT current source comprises a plurality of core PTAT current source units coupled in parallel.

According to a further embodiment, the adjustable slope is between 3100 ppm/°C and 4500 ppm/°C. If the number of pairs of slope adjusting current sources is five, this corresponds to a change of 280 ppm/°C per pair. In other words, the possible slope values in this case are 3100 ppm/°C, 3380 ppm/°C, 3660 ppm/°C, 3940 ppm/°C, 4220 ppm/°C, and 4500 ppm/°C corresponding respectively to activation of zero, one, two, three, four or five pairs of slope adjusting current sources.

According to a second aspect, there is provided a method of generating a proportional to absolute temperature, PTAT, output current with adjustable slope and fixed current value at a predetermined reference temperature, the method comprising (a) providing a current amplifier having an input and an output, (b) providing a core PTAT current source coupled to supply a core PTAT current to the input of the current amplifier, (c) providing a plurality of pairs of slope adjusting current sources, each pair of slope adjusting current sources comprising one constant current source and one auxiliary PTAT current source, and (d) adjusting the slope of the PTAT output current at the output of the current amplifier by selectively coupling a subset of the plurality of pairs of slope adjusting current sources to the input of the current amplifier such that the constant current source of each pair in the subset subtracts a corresponding constant current from the input of the current amplifier while the auxiliary PTAT current source of each pair in the subset adds a corresponding auxiliary PTAT current to the input of the current amplifier.

This aspect is essentially based on the same idea as the first aspect described above.

It should be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless otherwise indicated, in addition to any combination of features belonging to one type of subject matter also any combination of features relating to different subject matters, in particular a combination of features of the method type claims and features of the apparatus type claims, is also disclosed with this document.

The aspects defined above and further aspects of the present invention will be apparent from the examples of embodiment to be described hereinafter and are explained with reference to the examples of embodiment. The invention will be described in more detail hereinafter with reference to examples of embodiment to which the invention is, however, not limited.

### BRIEF DESCRIPTION OF THE DRAWING

Figure 1 shows a diagram of a device in accordance with an embodiment.
Figure 2 shows a graph illustrating the offset resulting from subtraction of a constant current from a core PTAT current.
Figure 3 shows a graph illustrating the change in slope resulting from subtraction of constant current and amplification.

### DETAILED DESCRIPTION

The illustration in the drawing is schematic. It is noted that in different figures, similar or identical elements are provided with the same reference signs or with reference signs, which differ only within the first digit.

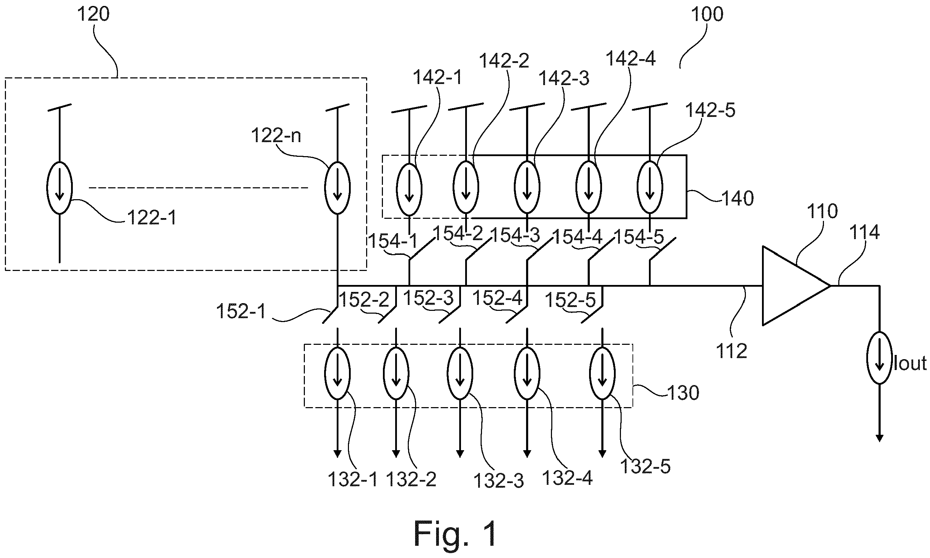

Figure 1 shows a diagram of a device 100 in accordance with an embodiment. The device 100 comprises a current amplifier 100 having an input 112 and an output 114, a core PTAT current source 120 comprising a plurality of core PTAT current source units 122-1, ... 122-n coupled in parallel to supply a core PTAT current to the input 112 of the current amplifier 110, a set 130 of five constant current sources 132-1, 132-2, 132-3, 132-4, and 132-5, a set 140 of five auxiliary PTAT current sources 142-1, 142-2, 142-3, 142-4, and 142-5, and switching circuitry comprising switches 152-1, 152-2, 152-3, 152-4, and 152-5 for selectively coupling the constant current sources 132-1, 132-2, 132-3, 132-4, and 132-5 to subtract current from the input 112 of the current amplifier 110 and switches 154-1, 154-2, 154-3, 154-4, and 154-5 for selective coupling the auxiliary PTAT current sources 142-1, 142-2, 142-3, 142-4, and 142-5 to add current to the input 112 of the current amplifier 110. The switches 152-1, 152-2, 152-3, 152-4, 152-5, 154-1, 154-2, 154-3, 154-4, and 154-5 of the switching circuitry are configured to couple the constant current sources 132-1, 132-2, 132-3, 132-4, and 132-5 and the auxiliary PTAT current sources 142-1, 142-2, 142-3, 142-4, and 142-5 in pairs, i.e. such that when switch 152-1 is closed, then switch 154-1 is also closed and vice versa, when switch 152-2 is closed, then switch 154-2 is also closed and vice versa, when switch 152-3 is closed, then switch 154-3 is also closed and vice versa, when switch 152-4 is closed, then switch 154-4 is also closed and vice versa, and when switch 152-5 is closed, then switch 154-5 is also closed and vice versa.

Each of the core PTAT current source units 122-1, ... 122-n may be implemented using a weak inversion based circuit or a bandgap to provide a current of 2.5 µA at the predetermined reference temperature, e.g. at 27°C. Thus, if n=18, the total current provided by the core PTAT current source 120 will be 45 µA.

Each of the constant current sources 132-1, 132-2, 132-3, 132-4, and 132-5 in the set 130 may be implemented using a bandgap to subtract a current of 5 µA independent of the temperature. If all five constant current sources 130 are coupled to the input 112 of the current amplifier 110, the total subtracted constant current will be equal to 25 µA.

Each of the auxiliary PTAT current sources 142-1, 142-2, 142-3, 142-4, and 142-5 in the set 140 may also be implemented using a weak inversion based circuit or a bandgap to add a current of 5 µA at the predetermined reference temperature, and a current lower than 5 µA at temperature below the predetermined reference temperature and a current above 5 µA at temperatures above the predetermined reference temperature. If all five auxiliary PTAT current sources 140 are coupled to the input 112 of the current amplifier 110, the total added current will be equal to 25 µA at the predetermined reference temperature, i.e. the same current as subtracted by the constant current sources 130.

In other words, when the temperature is equal to the predetermined reference temperature, the output PTAT current lout at the output 114 of the current amplifier 110 will - independent on how many pairs of slope adjusting current sources 130, 140 are coupled to the input 112 of the current amplifier 110 - be equal to the core PTAT current multiplied with the gain of the current amplifier. Accordingly, the output current lout will have the same fixed value, e.g. 1 mA, at the predetermined reference temperature for all possible slopes.

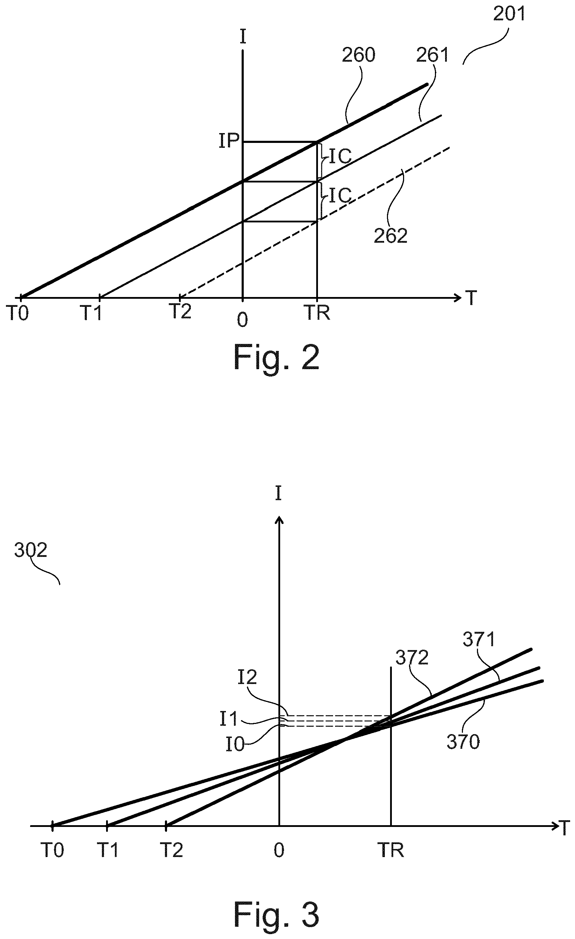

Figure 2 shows a graph 201 illustrating the offset resulting from subtraction of a constant current from a core PTAT current. More specifically, the line 260 illustrates a core PTAT current without subtraction of constant current. This PTAT current is zero at temperature T0 and equal to IP at the predetermined reference temperature TR. The line 261 illustrates the same PTAT current with subtraction of a constant current IC. As can be seen, this current is zero at a larger temperature T1>T0 and equal to IP-IC at the predetermined reference temperature. Similarly, the line 262 illustrates the same PTAT current with subtraction of twice the constant current, i.e. 2*IC. This current is zero at an even larger temperature T2>T1>T0 and equal to IP-2*Ic at the predetermined reference temperature.

Figure 3 shows a graph 302 illustrating the change in slope resulting from subtraction of constant current and amplification. More specifically, Figure 3 shows the output from a current amplifier (such as current amplifier 110 in Figure 1) when the currents 260, 261 and 262 are supplied to its input. As can be seen from Figure 3, this results in respective output currents 370 (corresponding to input current 260), 371 (corresponding to input current 261), and 372 (corresponding to input current 262). While the current 370 (corresponding to no subtracted constant current) has the value I0=A*IP (where A is the gain of the current amplifier) at the predetermined reference temperature, the other currents 371 and 372 have different (larger) current values I1 and I2 at the predetermined reference temperature.

By including the auxiliary PTAT current sources 140 shown in Figure 1 and discussed in detail above, this unwanted difference in output current at the predetermined reference temperature TR is avoided.

It is noted that, unless otherwise indicated, the use of terms such as "upper", "lower", "left", and "right" refers solely to the orientation of the corresponding drawing.

It is noted that the term "comprising" does not exclude other elements or steps and that the use of the articles "a" or "an" does not exclude a plurality. Also elements described in association with different embodiments may be combined. It should also be noted that reference signs in the claims should not be construed as limiting the scope of the claims.

## Claims

1. A device (100) for generating a proportional to absolute temperature, PTAT, output current (lout) with adjustable slope and fixed current value at a predetermined reference temperature (TR), the device comprising
a current amplifier (110) having an input (112) and an output (114),
a core PTAT current source (120) coupled to supply a core PTAT current to the input of the current amplifier,
a plurality of pairs of slope adjusting current sources, each pair of slope adjusting current sources comprising one constant current source (132-1, 132-2, 132-3, 132-4, 132-5) and one auxiliary PTAT current source (142-1, 142-2, 142-3, 142-4, 142-5), and
switching circuitry adapted to adjust the slope of the PTAT output current at the output of the current amplifier by selectively coupling a subset of the plurality of pairs of slope adjusting current sources to the input of the current amplifier such that the constant current source of each pair in the subset subtracts a corresponding constant current from the input of the current amplifier while the auxiliary PTAT current source of each pair in the subset adds a corresponding auxiliary PTAT current to the input of the current amplifier.

2. The device according to the preceding claim, wherein the current of each constant current source is equal to the current of each auxiliary PTAT current source when the temperature is equal to the predetermined reference temperature.

3. The device according to any of the preceding claims, wherein the predetermined reference temperature is 27°C.

4. The device according to any of the preceding claims, wherein the core PTAT current source comprises a plurality of core PTAT current source units (122-1, ..., 122-n) coupled in parallel.

5. The device according to any of the preceding claims, wherein the adjustable slope is between 3100 ppm/°C and 4500 ppm/°C.

6. A method of generating a proportional to absolute temperature, PTAT, output current with adjustable slope and fixed current value at a predetermined reference temperature, the method comprising
providing a current amplifier having an input and an output,
providing a core PTAT current source coupled to supply a core PTAT current to the input of the current amplifier,
providing a plurality of pairs of slope adjusting current sources, each pair of slope adjusting current sources comprising one constant current source and one auxiliary PTAT current source, and
adjusting the slope of the PTAT output current at the output of the current amplifier by selectively coupling a subset of the plurality of pairs of slope adjusting current sources to the input of the current amplifier such that the constant current source of each pair in the subset subtracts a corresponding constant current from the input of the current amplifier while the auxiliary PTAT current source of each pair in the subset adds a corresponding auxiliary PTAT current to the input of the current amplifier.
